**Europäisches Patentamt**

**European Patent Office**

**Office européen des brevets**

(19)

(11) Veröffentlichungsnummer: **0 002 187**
**B1**

(12) **EUROPÄISCHE PATENTSCHRIFT**

(45) Veröffentlichungstag der Patentschrift: **14.10.81**

(51) Int. Cl.³: **A 61 C 19/00**

(21) Anmeldenummer: **78101176.2**

(22) Anmeldetag: **19.10.78**

(54) **Steuerventilanordnung für zahnärztliche Geräte.**

(30) Priorität: **26.11.77 DE 2752938**

(43) Veröffentlichungstag der Anmeldung:
**13.06.79 Patentblatt 79/12**

(45) Bekanntmachung des Hinweises auf die Patenterteilung:
**14.10.81 Patentblatt 81/41**

(84) Benannte Vertragsstaaten:
**CH FR GB SE**

(56) Entgegenhaltungen:
**DE - A - 2 241 838**
**DE - A - 2 316 279**
**DE - A - 2 604 246**
**DE - A - 2 722 674**
**DE - B - 1 958 552**
**DE - B - 2 151 512**

(73) Patentinhaber: **Bürkert GmbH**
**Postfach 20 Lipfersberger Strasse 1**
**D-7118 Ingelfingen (DE)**

(72) Erfinder: **Dettmann, Heinrich, Dipl.-Ing.**
**Vogtherrstrasse 4**
**D-7119 Niedernhall (DE)**
Erfinder: **Mehrer, Otto**
**Wollreffenweg 54**
**D-7110 Öhringen (DE)**

(74) Vertreter: **Bunke, Max, Dipl.-Ing. et al,**
**Postfach 1186 Lessingstrasse 9**
**D-7000 Stuttgart 1 (DE)**

Courier Press, Leamington Spa, England.

## Steuerventilanordnung für zahnärztliche Geräte

Die Erfindung betrifft eine Steuerventilanordnung für zahnärztliche Geräte, bestehend aus mehreren, jeweils einzeln vorliegenden Steuerventilblöcken mit untereinander gleichen Grundkörpern, die unter Zwischenlage von Dichtungskörpern zwischen ihren zusammenzuspannenden Stirnflächen zu einer zwischen Endstücken angeordneten, zusammen ein einziges Bauteil bildenden Steuergruppe zusammengesetzt und durch Längszugstangen zusammengespannt sind, zu denen sich in den einzelnen Steuerventilblöcken von Stirnfläche zu Stirnfläche verlaufende, aneinander anschließende Kanalabschnitte zur Bildung von Kanälen für Steuer- und Versorgungsmedien parallel erstrecken, die über weitere, im Innern der Grundkörper vorgesehene Kanäle oder Bohrungen mit den verschiedenen Handstücken der angeschlossenen zahnärztlichen Instrumente verbindbar sind.

Solche Anordnungen dienen zur Steuerung von Antriebs-, Kühl- und Spülmedien für die einer zahnärztlichen Behandlungseinheit zugeordneten Instrumente. Sie müssen verschiedenartig arbeitende Steuereinheiten enthalten, z.B. solche, die als Druckregler, Nachsaugventile, Absperrventile, Rückschlagventile, Filtereinheiten und dergl. arbeiten.

Eine Vorrichtung der eingangs genannten Gattung ist bekannt aus DE—A— 2 604 246. Bei der bekannten Vorrichtung münden in den Stirnflächen der Grundkörper neben den Bohrungen für die Längszugstangen und den Kanalabschnitten für die Weiterleitung der Steuer- und Versorgungsmedien andere im Inneren der Grundkörper vorgesehene Steuerventile und Steuerkanäle aus, die in eine zugeordnete Steuerkammer im jeweils benachbarten Grundkörper übergehen und dort angesteuert werden. Die Kanäle für die Steuer- und Versorgungsmedien sind nicht symmetrisch zu irgendeiner geometrischen Achse der Grundkörper angeordnet. Die Steuerventile, die aus der gleichen Stirnfläche wie die Kanalabschnitte für die Versorgungsmedien ausmünden, sind gleichfalls nicht symmetrisch angeordnet. Dadurch müssen die einzelnen grundkörper in einer zweinander genau festgelegten unveränderlichen Lageorientierung innerhalb der Steuergruppe angeordnet werden.

Der Erfindung liegt die Aufgabe zugrunde, bei Anordnungen der genannten Gattung in kostensparender Weise die Anzahl der Anschlußmöglichkeiten zu vergrößern und die Bausteine, aus denen sie zusammengesetzt sind, so auszubilden, daß sich eine raumsparende, kostengünstige Gesamtanordnung ergibt.

Die erfindungsgemäße Lösung dieser Aufgabe liegt darin, daß in den Stirnflächen der im Ursprungszustand gleichen und gegebenenfalls bei der Montage nachbearbeitbaren Grundkörper der verschiedenen Steuerventilblöcke (I bis V) neben den Bohrungen für die Längszugstangen ausschließlich die Kanalabschnitte ausmünden, deren Mündungen in den zur Spannrichtung senkrechten Stirnflächen symmetrisch zu einer mittleren geometrischen Höhenachse der Grundkörper angeordnet sind, und daß die im Inneren jedes Grundkörpers vorgesehenen Kanäle oder Bohrungen, die eine diesen durchsetzende Querkammer mit einem Ventilsitz umfassen, mit ihren geometrischen Achsen insgesamt quer zur Spannrichtung verlaufen.

Die erfindungsgemäß ausgebildete Anordnung ermöglicht es, die Versorgungsmedien wahlweise auf einer der beiden Seiten des in der Querkammer angebrachten Ventilsitzes einzuspeisen. Sie ermöglicht es ferner, in den zusammengespannten Ventilblöcken Grundkörper gegenüber den benachbarten bezüglich ihrer Höhenachse in um 180° verdrehter Stellung zu verwenden, in der sie unverändert mit den benachbarten Körpern zusammenpassen. Diese bei der Bauart nach der oben besprochenen DE—A—2 604 246 nicht gegebene Verdrehmöglichkeit der Grundkörper trägt dazu bei, außen geführte Versorgungs- und Steuerumleitungen entbehrlich zu machen und die Anzahl der Anschlußmöglichkeiten zu vergrößern. Die Erfindung macht weiter von der Erkenntnis vorteilhaften Gebrauch, daß eine kostensparende Vereinfachung auch darin liegt, daß die Grundkörper der verschiedenen Ventilblöcke im Ausgangszustand gleich sind, obwohl sie für ihre Verwendung in den einzelnen besonderen Blöcken nachgearbeitet werden können, wobei aber die Ausbildung der Grundkörper es ermöglicht, mit sehr einfachen Nacharbeitungsvorgängen auszukommen. Diese Nachbearbeitung vergrößert zusätzlich die Zahl der Anschlußmöglichkeiten. Die Kanalabschnitte und Kammern liegen dabei so, daß sie sich leicht durch Anzapfbohrungen verbinden lassen, während offene Kanäle leicht durch eingepreßte Kugeln verschlossen werden können. Eine besondere Ausbildung der Kanalabschnitte liegt darin, daß in ihnen leicht entfernbare Trennwände vorgesehen sind, so daß ein so zunächst verschlossener Kanalabschnitt leicht zu einem offenen Durchgang gemacht und mit anderen solchen Durchgängen in benachbarten Grundkörpern zu einer durchgehenden Leitung verbunden werden kann.

Eine Weiterbildung der Erfindung liegt darin, daß zur Bildung der Kanäle für Steuer- und Versorgungsmedien im Inneren jedes Grundkörpers sechs Kanalabschnitte vorgesehen sind, von denen vier jeweils paarweise sowohl zur Höhenachse als auch zu der Achse der Querkammer und zwei nur zur Höhenachse symmetrisch liegen. Hierdurch wird eine Verdrehbarkeit der Grundkörper nicht nur um die Höhenachse, sondern auch um die Achse der betreffenden Querkammer ermöglicht, was eine weitere Vergrößerung der Anzahl der Anschlußmöglichkeiten bedeutet.

Weitere Einzelheiten ergeben sich aus der folgenden Beschreibung von Ausführungsbeispielen in Verbindung mit den Unteransprüchen und der Zeichnung. In dieser sind

Fig. 1 ein Schaltbild einer Steuerventilanordnung nach der Erfindung mit Ventilblöcken I bis V,

Fig. 2 eine auseinandergezogene Ansicht der fünf Einzelventilblöcke der Anordnung nach Fig. 1

Fig. 3 ein Längsschnitt durch einen Grundkörper eines Steuerventilblockes,

Fig. 4 eine Draufsicht zu Fig. 3

Fig. 5 ein Schnitt nach der Linie A—B in Fig. 3,

Fig. 6 eine Seitenansicht des Grundkörpers von Fig. 3,

Fig. 7 ein der Fig. 3 entsprechender Schnitt durch den Grundkörper, wobei Nachbearbeitungsmöglichkeiten zwecks Anpassung an verschieden zu verwendende Steuerventilblöcke gezeigt sind.

Fig. 8 eine Draufsicht zu Fig. 7,

Fig. 9 eine Schnitt nach der Linie A—B in Fig. 7,

Fig. 10 Seitenansicht des Grundkörpers in Richtung der Pfeile A—B in Fig. 7,

Fig. 11 bis Fig. 15 Schnittdarstellungen der Ventile I bis V der Anordnung nach Fig. 1,

Fig. 16 ein Schema der Zusammenfügbarkeit von Steuerkanälen in aneinanderanschließenden Steuerventilblöcken im Schnitt,

Fig. 17 ein Dichtungselement in Ansicht, und

Fig. 18 eine Seitenansicht zu Fig. 17.

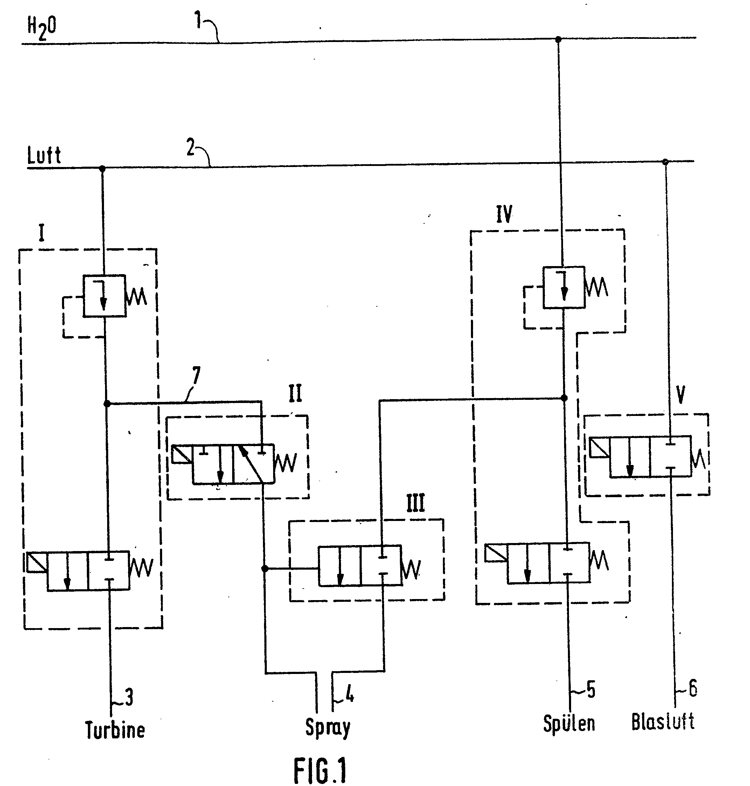

Bei dem Beispiel gemäß Fig. 1 wird über eine Leitung 1 Wasser und über eine Leitung 2 Druckluft zugeführt. Diese Arbeitsmittel müssen mit geregeltem Druck einzeln oder gemeinsam Anschlußstellen 3, 4, 5, 6 für eine Turbine eines Turbinenhandstückes, ein Sprayhandstück, eine Spüleinrichtung und eine Blasluftdüse zugeführt werden. Ein Steuerventilblock I ist eingangs-seitig an die Druckluftleitung 2 angeschlossen und enthält einerseits ein Druckregelventil zur Einstellung des Luftdrucks auf einen konstanten Betriebswert und außerdem ein 2/2—Wegeventil zur Versorgung der Turbine mit Druckluft. Von dem Ausgang des Luftdruckregelventils zweigt eine Leitung 7 zu einem Steuerventilblock II ab, der ein 3/2—Wegeventil bildet und die Druckluft für die Anschlußstelle 4 des Sprayhandstrückes liefert.

Ein Steuerventilblock V, der ein 2/2—Wegeventil bildet, ist ebenfalls eingangsseitig an die Druckluftleitung 2 angeschlossen und versorgt die Anschlußstelle 6 für die Blasluftdüse mit Druckluft.

An die Wasserleitung 1 ist ein Steuerventilblock IV angeschlossen, der einerseits ein Druckregelventil und andererseits ein 2/2—Wegeventil für die Anschlußstelle 5 der Spülvorrichtung umfaßt. An den Ausgang des Druckregelventils dieses Steuerventilblockes IV ist ein Steuerventilblock III angeschlossen, der durch den ausgang des Steuerventils II vor-gesteuert wird. Das Steuerventil III liefert das Wasser für das Sprayhandstück.

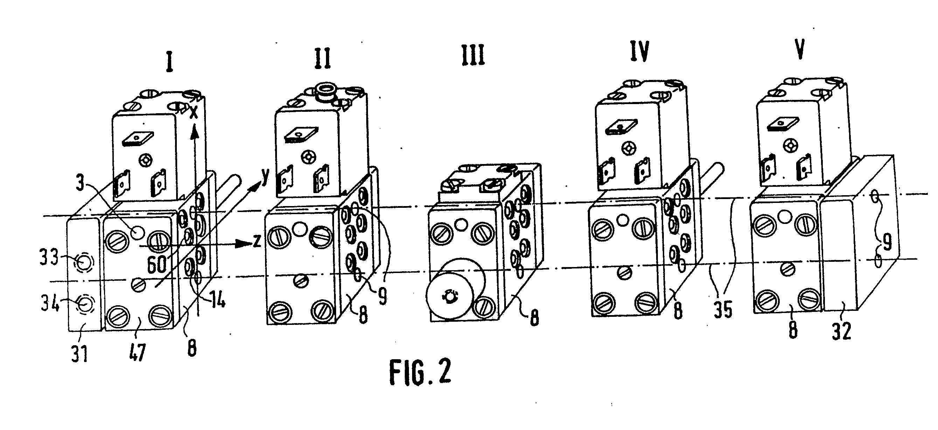

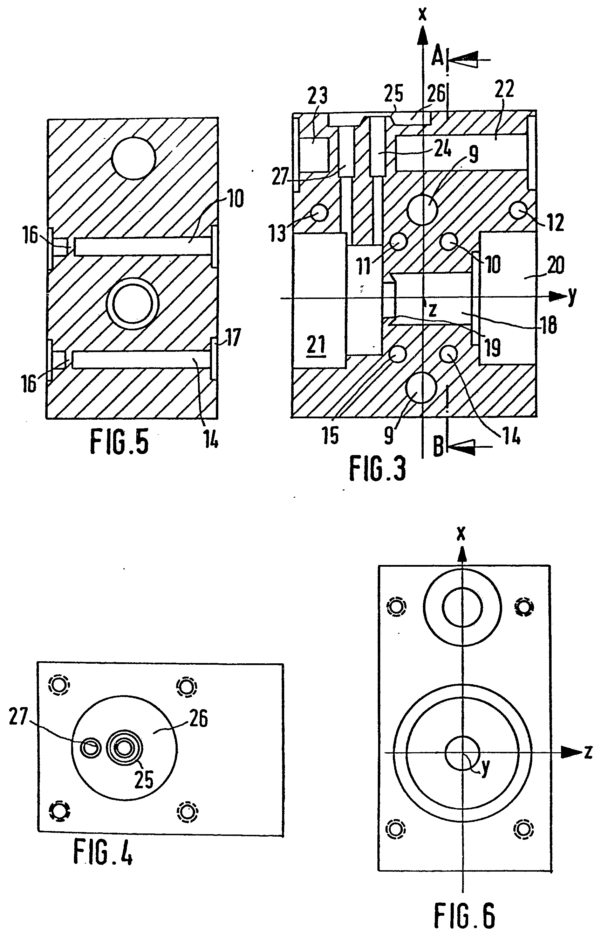

Jeder der Steuerventilblöcke I bis V hat einen gleichartigen Grundkörper 8 von rechtkantigen Außenabmessungen, wie er im einzelnen in den Fig. 3 bis 6 dargestellt ist. Parallel zur richtung der waagerechten Z—Achse (in Fig. 3 senkrecht zur Zeichnungsebene) sind in dem Grundkörper 8 zwei gerade Durchgänge 9 für in Längsrich-tung der Gesamtanordnung verlaufende Längs-zugstangen 35 (Fig. 2) vorgesehen. In der Zeichnungsebene verläuft in Fig. 3 rechtwinklig zur Z—Achse die Y—Achse, durch deren Schnittpunkt die senkrechte Höhenachse als X—Achse hindurchgeht. Jeweils symmetrisch zu der X, Z—Ebene sind in dem Grundkörper 8 paarweise zur Bildung von Versorgungs- und Steuerleitungen bestimmte Kanalabschnitte 10 bis 15 angeordnet. Diese Kanalabschnitte 10 bis 15 bilden keine Durchgangslöcher, sondern, vgl. Fig. 5, zweiseitig Sacklöcher, die jeweils durch eine Trennwande 16 voneinander getrennt sind. An den Mündungen der Kanalabschnitte 10 bis 15 sind für das Einlegen von Dichtungen geeignete Ringstufen 17 vorgesehen.

Senkrecht zu der X, Z—Ebene in Richtung der Y—Achse ist in den Grundkörper 8 eine sich durch diesen hindurch erstreckende Querkammer 18 mit einem Ventilsitz 19 eingearbeitet, die zylindrische Abschnitte 20, 21 verschiedener Durchmesser aufweist. Parallel zur Querkammer 18 sind Querkanalabschnitte 22, 23 vorgesehen, deren Mündungen als Anschlußstellen benutzbar sind. An die Querkammer 18 schließt ein senkrechter Durchgang 24 an, der in der oberen Stirnfläche des Grundkörpers 8 in einem Ventilsitz 25 mündet. Der Ventilsitz 25 steht über einen Ringkanal 26 mit einem, weiteren senkrechten Durchgang 27 in Verbindung.

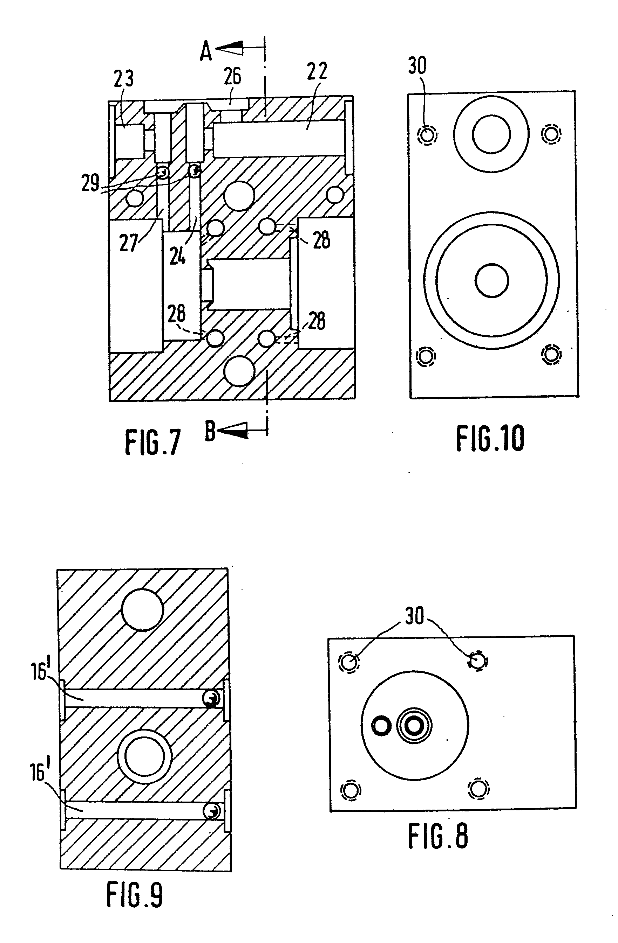

Der Grundkörper 8 nach Fig. 3 bis 6 kann durch einfaches Nacharbeiten den verschiedensten Anwendungsmöglichkeiten mit verschiedenen Ventilfunktionen angepaßt werden. Als solche Nacharbeiten kommen das Beseitigen von Trennwänden 16, das Absperren von Kanälen oder Durchgängen mittels einzupressender Kugeln und das Herstellen von Verbindungsbohrungen als Anzapfen vorhandener Kanäle in Betracht. Mann kann z.B. zwischen Kanalabschnitten und Ringräumen zusätzliche Bohrungen 28 vorsehen, wie in Fig. 7 bis 10 angedeutet. Man kann einzelne Trennwände 16 durchstoßen, wie in Fig. 9 bei 16' angegeben. Schließlich kann man zwischen den Querkanalabschnitten 22, 23 und dem Ringkanal 26 oder den Durchgängen 24, 27 Bohrungen anordnen. Man kann auch jeden der Durchgänge 24, 27 oder beide durch eingepreßte Kugeln 29 verschließen.

In den von der Z—Achse durchstoßenen Flächen des Grundkörpers 8 sind Gewindebohrungen 30 zur Befestigung von unten näher beschriebenen Abschlußdeckeln 40 angebracht.

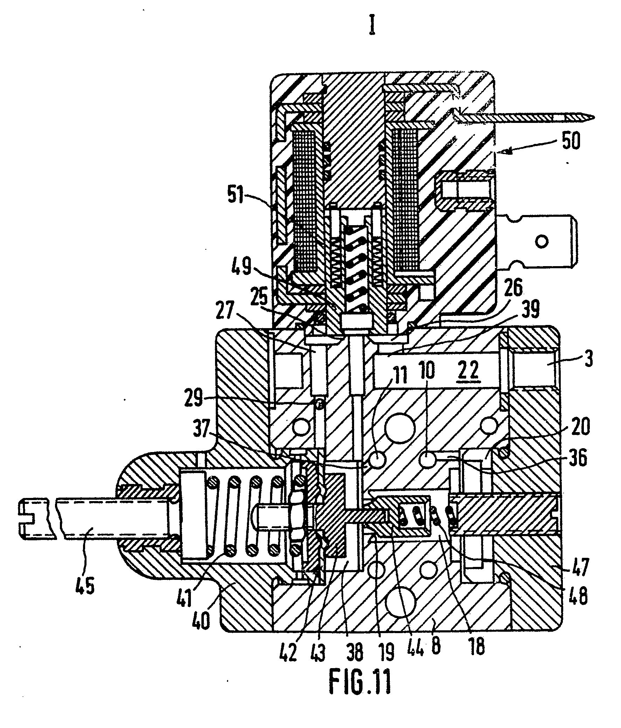

Im Regelfall wird bei jedem von mehreren aneinandergereihten Grundkörpern 8 der Kanalabschnitt 10 für Druckluft und der Kanalabschnitt 14 für für Wasser benutzt. Man kann dann durch Verbindung des Kanalabschnitts 10 mit dem Querkammerabschnitt 20 Druckluft auf eine Seite des Ventilsitzes 19 führen vgl. z.B. 36 in Fig. 11. Wenn man für eine andere Ventilfunktion Druckluft auf der gegenüberliegenden Seite des Ventilsitzes 19 zuführen muß, kann der Grundkörper 8 um die Höhenachse X, die hierefür Symmetrieachse ist, um 180° gedreht werden, so daß dann der Kanalabschnitt 11 mit dem Kanalabschnitt 10 und der Kanalabschnitt 15 mit dem Kanalabschnitt 14 eines benachbarten Grundkörpers fluchtet. Auf diese Weise ergeben sich aufgrund der zur Höhenachse X symmetrischen Anordnung der in Richtung der Achse Z verlaufenden Längskanalabschnitte Möglichkeiten zur Verwirklichung unterschiedlicher Ventilfunktionen.

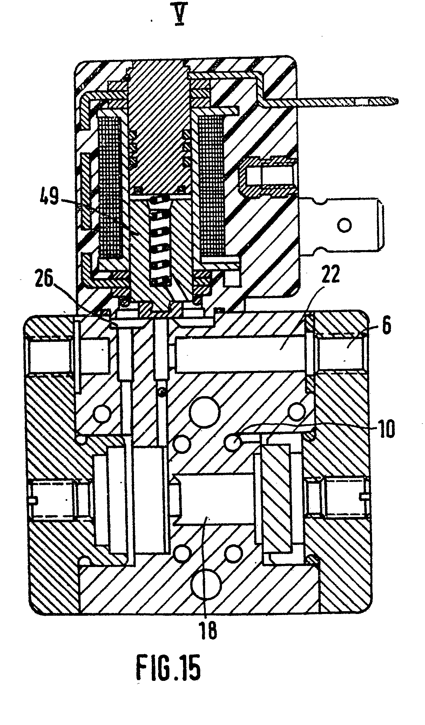

Die Verwirklichung verschiedenartiger Ventilfunktionen wird im folgenden unter Bezugnahme auf die Anordnung nach Fig. 1 und 2 in Verbindung mit Fig. 11 bis 15 erläutert. Jeweils an den freien Stirnflächen der Grundkörper der Steuerventile I und V sind gemäß Fig. 2 eine Anschluß-Endplatte 31 und eine Abschluß-Endplatte 32 angesetzt. Die Endplatte 31 hat einen Anschlußkanal 33 für die Druckluftleitung 1 sowie einen Anschlußkanal 34 für die Wasserleitung 2. Die Anschlußkanäle 33 und 34 sind innerhalb der Endplatte 31 rechtwinklig abgewinkelt und münden auf die Kanalabschnitte 10 bzw. 14 des Steuerventilblockes I. Wenn die Steuerventilblöcke I bis V der Steuerventilblock III, III ist als eintiger bei dem beschriebenen Beispiel in der oben erläuterten Weise um die X—Achse um 180° gedreht — in Richtung der Z—Achse aneinander gesetzt werden, kommen die Kanalabschnitte 10 und 14 jeweils fluchtend miteinander in Verbindung, so daß Druckluft und Druckwasser durch die, soweit die Trennwände 16 beseitigt sind, von den Abschnitten gebildeten Kanäle allen Steuerventilblöcken gemeinsam zugeführt werden. Durch die Durchgänge 9 sind die in Fig. 2 schematisch angedeuteten Längszugstangen 35 hindurchgeführt, mit denen die Blöcke zu einer kompakten Einheit zusammengespannt sind. Die Längszugstangen 35 reichen auch durch entsprechende Durchgänge 9′ der Endplatten 31 und 32 hindurch. Sie tragen an ihren Enden einen Kopf bzw. einen Gewindeabschnitt für Muttern.

Das Steuerventil I (Fig. 11) umfaßt einerseits ein Druckregelventil in der Querkammer 18 und andererseits ein 2/2—Wegeventil mit dem Ventilsitz 25. Der Grundkörper 8 ist hier wie folgt nachgearbeitet: Der Kanalabschnitt 10 für Druckluft ist durch eine Anzapfbohrung 36 mit dem Kammerabschnitt 20 verbunden, entsprechend der Kanalabschnitt 11 durch eine Anzapfbohrung 37 mit dem Kammerraum 38 hinter dem Ventilsitz 19. Der Durchgang 27 ist durch eine eingepreßte Kugel 29 abgesperrt. Der Ringkanal 26 ist durch eine Bohrung 39 mit dem Querkanal 22 verbunden.

Der Grundkörper 8 des Steuerventils I ist mit einem Anschlußdeckel 40 ausgestattet, der eine unter der Wirkung einer Feder 41 stehende Membran 42 enthält, die ihrerseits über einen Kolben 43 mit einem Ventilkörper 44 verbunden ist, der mit dem Ventilsitz 19 zusammenwirkt. Eine Einstellschraube 45 dient zur Einstellung der Vorspannung der Feder 41 und damit zur Einstellung des Regeldrucks. Der Kammerabschnitt 20 ist durch einen Abschlußdeckel 47 ebenfalls abgeschlossen, der eine einstellbare Anschlagvorrichtung 48 für den Ventilkörper 44 enthält.

Mit dem Ventilsitz 25 wirkt ein Ventilkörper 49 einer Magnetanordnung 50 zusammen. Die Ventilkammer 51 für den Ventilkörper 49 ist dicht abgeschlossen. Dieses Ventil wirkt als 2/2—Wegeventil für den Querkanal 22, der zu der Anschlußstelle 3 im Abschlußdeckel 47 führt.

Die Feder 41 hält den Ventilkörper 44 normalerweise in Offenstellung. Sobald der Druck auf der Ausgangsseite des Ventilsitzes 19 innerhalb des Kammerraumes 38 auf den eingestellten Regeldruck angestiegen ist, schließt dieses Druckregelventil, indem der Ventilkörper 44 und dem Ventilsitz 19 zur Anlage kommt. Dadurch steht innerhalb des Raumes 38 immer Druckluft mit dem eingestellten Regeldruck zur Verfügung. Mit Hilfe der Magnetanordnung 50 wird der Ventilkörper 49 gesteuert und gibt den Weg für diese Druckluft zur Anschlußstelle 3 für die Turbine frei. Außerdem wird die Druckluft mit dem Regeldruck über die Bohrung 37 in den Kanalabschnitt 11 geleitet, der mit dem Kanalabschnitt 11 des Ventilblockes II Verbindung hat.

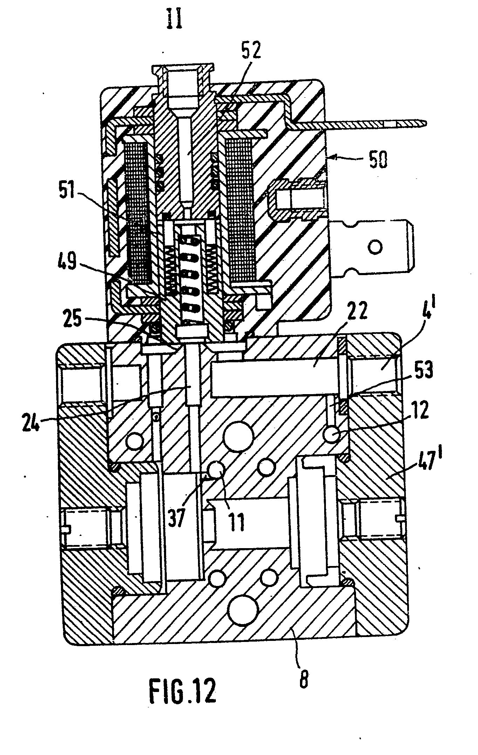

Der Ventilblock II (Fig. 12) arbeitet als 3/2d—Wegeventil.

Druckgeregelte Luft wird über den Kanalabschnitt 11 in den Grundkörper 8 eingeführt und gelangt durch die Anzapfbohrung 37 und den Durchgang 24 vor den Ventilsitz 25. Der Ventilsitz 25 ist durch den Ventilkörper 49 der Magnetanordnung 50 abgeschlossen. Die Ventilkammer 51 ist mit einer Entlüftungsbohrung 52 ausgestattet, so daß der Querkanal 22 in dem gezeichneten Schaltzustand der Ventilanordnung entlüftet ist. Der Querkanal 22 ist an ein Anschlußstelle 4′ in einem Abschlußdeckel 47′ angeschlossen. Die Anschlußstelle 4′ führt zu dem Luftanschluß des Sprayhandstückes. Innerhalb des Querkanals 22 zweigt eine Bohrung 53 zu dem Kanalabschnitt 12 ab. Der Kanalabschnitt 12 führt Druckluft als Steuermedium zu dem vorgesteuerten, als Rückschlagventil arbeitenden Ventilblock III. Die Arbeitsweise des als Steuerventil arbeitenden Ventilblocks II ergibt sich aus Fig. 12.

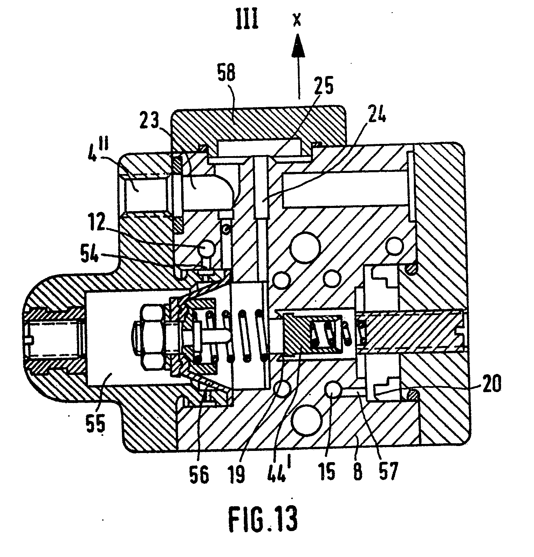

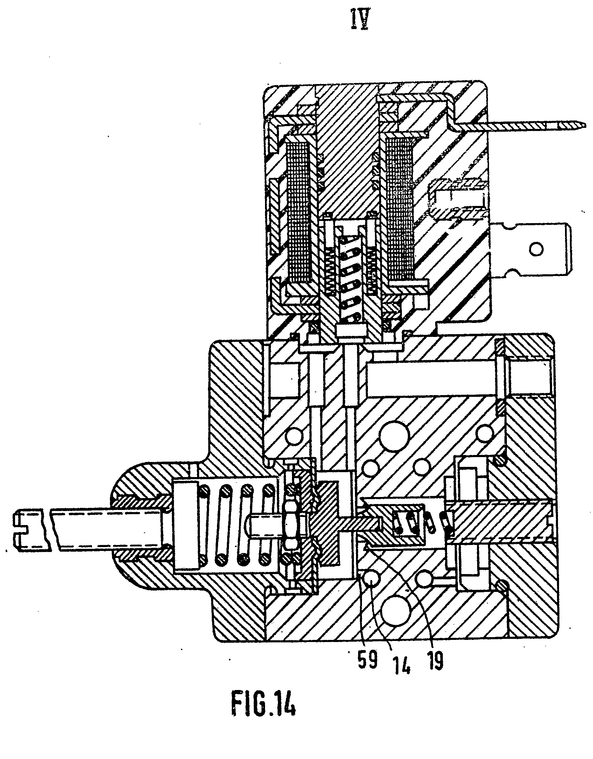

Der Grundkörper 8 des Als Rückschlagventil arbeitenden Ventilblockes III (Fig. 13) ist gegenüber der Lage der Grundkörper der Blöcke I und II um 180° um die X—Achse gedreht, so daß über den Kanalabschnitt 15 druckgeregeltes Wasser von dem als Steuerventil arbeitenden Block IV, vgl. Fig. 14, zugeführt werden kann.

Dem Steuerventil im Block III wird druckgeregelte Luft über den Kanalabschnitt 12 zugeführt, die über eine Bohrung 54 in eine im Abschlußdeckel 40 gebildete Vorsteuerkammer 55 eingespeist wird. Eine Steuermembran 56 steht über Zwischenglieder mit dem Ventilkörper 44' in Wirkungsverbindung. Das druckgeregelte Wasser strömt aus dem Kanalabschnitt 15 über eine Bohrung 57 in den Kammerabschnitt 20 vor den Ventilsitz 19.

Bei geöffnetem Ventilkörper 44' kann das Druckwasser über den Kanalabschnitt 24 in den Querkanal 23 zu einer im Deckel 40 vorgesehenen Anschlußstelle 4" strömen. Der Ventilsitz 25 ist in diesem Fall durch eine Abschlußkappe 58 überbrückt. Der Steuerventilblock III leitet damit druckgeregeltes Wasser für das Sprayhandstück weiter; es ist durch die Druckluft vorgesteuert.

Der als Steuerventil arbeitende Block (Fig. 14) IV, der einerseits druckgeregeltes Wasser für das Sprayhandstück und adererseits für die an die Anschlußstelle 5 angeschlossene Spülvorrichtung liefert, ist weitgehend ähnlich dem Steuerventilblock I aufgebaut. Er umfaßt ein Regelventil und ein 2/2—Wegeventil als Absperrventil.

Die Austrittsseite des Ventilsitzes 19 ist über eine Anzapfbohrung 59 mit dem Kanalabschnitt 15 verbunden, der seinerseits mit dem Kanalabschnitt 14 des Steuerventilblocks III (Fig. 13) fluchtet, weil dieser in um die X—Achse um 180° gedrehter Lage zwischen die Blöcke II und IV gesetzt ist.

Der Kanalabschnitt 10 des Ventilblockes V schließlich ist an die Druckluftleitung 1 unmittelbar angeschlossen. Die Druckluft gelangt über die Querkammer 18 in den Ringkanal 26. Der Ventilkörper 49 wirkt als Absperrventil und steuert den Durchgang zu dem Querkanal 22, dermit der Anschlußstelle 6 für die Blasluftdüse Verbindung hat.

Die vorstehende Einzelbeschreibung der Schnittdarstellungen Fig. 11 bis 15 läßt erkennen, daß in den einzelnen Ventilblöcken gleich artige Grundkörper verwendet sind, die durch zusätzliche Bohrungen und/oder durch das Einpressen von Absperrkugeln sowie durch die Wahl einer von zwei möglichen, um 180° gegeneinander gedrehten Winkellagen und die Beseitigung von im Grundkörper in dessen Rohzustand vorhandenen Trennwänden den verschiedenen Verwendungsarten angepaßt sind.

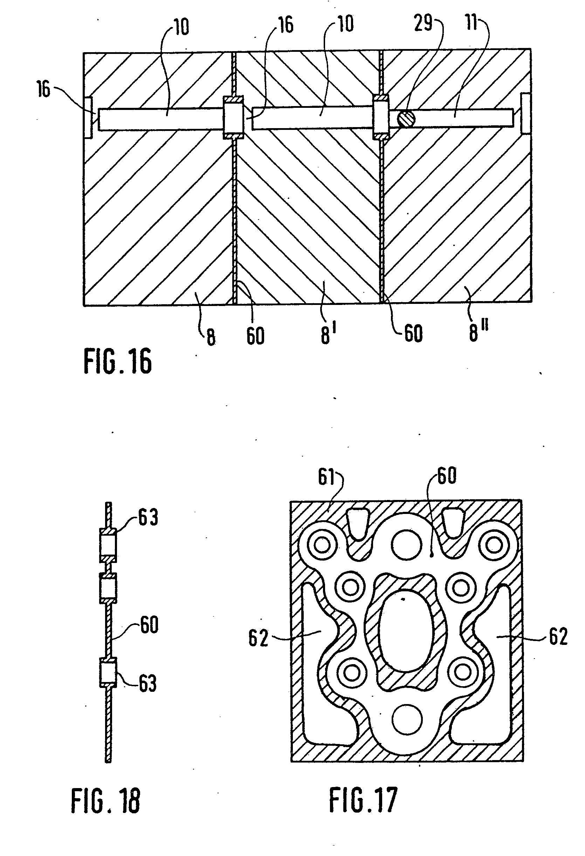

Diese Anpassungsmöglichkeiten sind in Fig. 16 zusätzlich erläutert, wo in den Grundkörpern 8, 8' und 8" die Trennwand 16 der Kanalabschnitte 10 noch vorhanden ist. Der Grundkörper 8" ist um die X—Achse um 180° gedreht, so daß der Kanalabschnitt 10 des Grundkörpers 8' mit dem Kanalabschnitt 11 des Grundkörpers 8" fluchtet. Der Kanalabschnitt 11 von 8" sit aber an seinem in Fig. 16 linken Ende durch eine eingepreßte Kugel 29 abgesperrt.

Zwischen den aneinanderstoßenden Stirnflächen der Grundkörper 8 der aneinandergereihten Ventilblöcke I bis V sind Dichtungskörper 60 vorgesehen (Fig. 17 und 18). Die schraffierte Fläche 61 Kennteichnet die freigelessenen Stirnflächen bereiche der Grundkörper 8. Innerhalb der Flächenbereiche 62 befinden sich aus spritztechnischen Gründen vorhandene Hohlräume. Der Dichtungskörper 60 bildet aus seiner Fläche hervorstehende dichtringartige zylindrische Stutzen 63, die entsprechende Ringstufen 17 der Mündungen der Kanalabschnitte gegeneinander abdichten, wenn die Blöcke mittels der Längszugstangen 35 zusammengespannt werden.

Das beschriebene Beispiel läßt zahlreiche Abwandlungsmöglichkeiten zu, so das Hinzufügen weiterer Ventilblöcke für zusätzliche Anschlüsse. Häufig werden z.B. zwei Anschlüsse für Turbinenhandstücke vorzusehen sein, deren Turbinen mit auf verschiedene Drücke geregeltem Wasser zu beaufschalgen sind. Es wäre dann ein dem Block I des beschriebenen Beispiels im wesentlichen entsprechender Block diesem noch vor oder nachzuschalten.

**Patentansprüche**

1. Steuerventilanordnung für zahnärztliche Geräte, bestehend aus mehreren, jeweils einzeln vorliegenden Steuerventilblöcken mit untereinander gleichen Grundkörpern, die unter Zwischenlage von Dichtungskörpern (60) zwischen ihren zusammenzuspannenden Stirnflächen zu einer zwischen Endstücken angeordneten, zusammen ein einziges Bauteil bildenden Steuergruppe zusammengesetzt und durch Längszugstangen zusammengespannt sind, zu denen sich in den einzelnen Steuerventilblöcken von Stirnfläche zu Stirnfläche verlaufende, aneinander anschließende Kanalabschnitte zur Bildung von Kanälen für Steuer- und Versorgungsmedien parallel erstrecken, die über weitere, im Innern der Grundkörper vorgesehene Kanäle oder Bohrungen mit den verschiedenen Handstücken der angeschlossenen zahnärztlichen Instrumente verbindbar sind, dadurch gekennzeichnet, daß in den Stirnflächen der im Ursprungszustand gleichen und gegebenenfalls bei der Montage nachbearbeitbaren Grundkörper (8) der verschiedenen Steuerventilblöcke (I bis V) neben den Bohrungen (9) für die Längszugstangen (35) ausschließlich die Kanalabschnitte (10—15) ausmünden, deren Mündungen in den zur Spannrichtung senkrechten Stirnflächen symmetrisch zu einer mittleren geometrischen Höhenachse (X) der Grundkörper angeordnet sind, und daß die im Inneren jedes Grundkörpers (8) vorgesehenen Kanäle oder Bohrungen (22—28),

die eine diesen durchsetzende Querkammer (18) mit einem Ventilsitz (19) umfassen, mit ihren geometrischen Achsen insgesamt quer zur Spannrichtung verlaufen.

2. Anordnung nach Anspruch 1, dadurch gekennzeichnet, daß zur Bildung der Kanäle für Steuer- und Versorgungsmedien im Inneren jedes Grundkörpers (8) sechs Kanalabschnitte (10—15) vorgesehen sind, von denen vier (10, 11; 14, 15) jeweils paarweise sowohl zur Höhenachse (X) als auch zu der Achse (Y) der Querkammer (18) und zwei (12, 13) nur zur Höhenachse (X) symmetrisch liegen.

3. Anordnung nach Anspruch 1 oder 2, dadurch gekennzeichnet, daß die im Grundkörperinneren vorgesehenen Kanäle oder Bohrungen zu der Querkammer (18) parallel verlaufende, miteinander fluchtende Querkanalabschnitte (22, 23) umfassen, deren einander zugewandte Mündungen in Abstand voneinander enden.

4. Anordnung nach Anspruch 1 oder einem der folgenden, dadurch gekennzeichnet, daß die Bohrungen für die Längszugstangen (35) zwei Durchgänge (9) umfassen, deren Mittelpunkte, die auf der Höhenachse (X) liegen, beidseitig des Schnittpunktes dieser Achse mit der Achse (Y) der Querkammer (18) verteilt und von diesem Schnittpunkt gleich weit entfernt sind.

5. Anordnung nach einem der Ansprüche 1 bis 4, dadurch gekennzeichnet, daß an die Querkammer (18) ein senkrecht zu deren Achse (Y) verlaufender Kanalabschnitt (24) anschließt, der in einer oberen Stirnfläche des Gründkörpers (8) in einen Ventilsitz (25) mündet.

6. Anordnung nach einem der Ansprüche 1 bis 5, dadurch gekennzeichnet, daß den Grundkörpern (8) mehrere unterschiedliche Abschlußdeckel (40, 47, 50, 58) zugeordnet sind, die für verschiedenartiges Zusammenwirken mit einem mit dem Ventilsitz (19) der Querkammer (18) zusammenarbeitenden Ventilkörper (44) und/oder anderen in den Deckeln selbst geführten Ventilkörpern (49) oder Anschlußstellen (25) ausgebildet sind.

7. Anordnung nach einem der Ansprüche 1 bis 6, dadurch gekennzeichnet, daß zwischen den einander zugewandten Stirnflächen der aneinander gereihten Grundkörper (8) die Mündungen in den Stirnflächen flächenhaft umgebende Dichtungskörper (60) mit in Ringstufen (17) um die Mündungen der Kanalabschnitte (10—15) eingreifenden dichtringartigen zylindrischen Stutzen (63) vorgesehen sind. (Fig. 17 und 18).

8. Steuerventilanordnung nach Anspruch 1 oder einem der folgenden, dadurch gekennzeichnet, daß innerhalb der Kanalabschnitte (10—15) leicht entfernbare Trennwände (16) vorgesehen sind.

9. Anordnung nach einem der Ansprüche 1 bis 8, dadurch gekennzeichnet, daß innerhalb der Gesamtanordnung einzelne Kanäle oder Bohrungen (24, 27) bzw. Kanalabschnitte (11) in den einzelnen Grundkörpern (8) der verschiedenen Ventilblöcke (I bis V) durch eingepreßte Kugeln (29) abgesperrt sind.

**Claims**

1. Control-valve arrangement for dental instruments, consisting of several control-valve blocks, each present individually, with mutually identical basic bodies which, with sealing elements (60) interposed between their end faces to be clamped together, are combined to form a control group, located between end pieces and together constituting a single structural part, and which are clamped together by means of longitudinal connecting rods, parallel to which channel sections, running in the individual control-valve blocks from end face to end face and adjoining one another, extend, to form channels for control and supply media, which can be connected, via further channels or bores provided in the interior of the basic bodies, to the various handles of the connected dental instruments, characterised in that, next to the bores (9) for the longitudinal connecting rods (35), exclusively the channel sections (10—15) open out into the end faces of the basic bodies (8) of the various control-valve blocks (I to V), which basic bodies are identical in the original state and can, if appropriate, be reworked during assembly, the mouths of said channel sections being located in the end faces perpendicular to the clamping direction, symmetrically to a central geometrical vertical axis (X) of the basic bodies, and in that the channels or bores (22—28), which are provided in the interior of each basic body (8) and which surround a transverse chamber (18) passing through said basic body and having a valve seat (19), extend with their geometrical axes generally transversely to the clamping direction.

2. Arrangement according to Claim 1, characterised in that, to form the channels for control and supply media, there are provided in the interior of each basic body (8) six channel sections (10—15), four (10, 11; 14, 15) of which lie, in pairs, symmetrically both to the vertical axis (X) and to the axis (Y) of the transverse chamber (18) and two (12, 13) of which lie symmetrically to the vertical axis (X) only.

3. Arrangement according to Claim 1 or 2, characterised in that the channels or bores provided in the interior of the basic bodies include transverse-channel sections (22, 23) which run parallel to the transverse chamber (18) and are aligned with one another and of which the mouths facing one another end at a distance from one another.

4. Arrangement according to Claim 1 or one of the following claims, characterised in that the bores for the longitudinal connecting rods (35) comprise two passages (9), of which the centre points are located on the vertical axis (X) are distributed on both sides of the point of intersection of this axis with the axis (Y) of the transverse chamber (18) and are at the same distance from this point of intersection.

5. Arrangement according to one of Claims 1 to 4, characterised in that there adjoins the transverse chamber (18) a channnel section (24) which extends perpendicularly to the axis (Y) of said chamber and which opens, in an upper end face of the basic body (8), into a valve seat (25).

6. Arrangement according to one of Claims 1 to 5, characterised in that assigned to the basic bodies (8) are several different closing covers (40, 47, 50, 58) which are designed to interact in different ways with a valve body (44), cooperating with the valve seat (19) of the transverse chamber (18), and/or with other valve bodies (49) or connecting points (25) guide in the covers themselves.

7. Arrangement according to one of Claims 1 to 6, characterised in that, between the end faces, turned towards one another, of the basic bodies (8) placed in a row against one another, there are provided sealing elements (60) surrounding the mouths in the end faces two-dimensionally and having cylindrical nozzles (63) resembling sealing rings, which engage in annular steps (17) round the mouths of the channel sections (10—15). (Figures 17 and 18).

8. Control-valve arrangement according to Claim 1 or one of the following claims, characterised in that easily removable partitions (16) are provided within the channel sections (10—15).

9. Arrangement according to one of Claims 1 to 8, characterised in that, within the arrangement as a whole, individual channels or bores (24, 27), or channel sections (11), in the individual basic bodies (8) of the various valve blocks (I to V) are shut off by means of pressed-in balls (29).

**Revendications**

1. Dispositif à vannes de commande pour appareils dentaires composé de plusieurs blocs de vannes ou distributeurs de commande individuels présentant des corps de base identiques qui sont assemblés en un groupe de commande disposé entre des pièces terminales et formant un seul élément de construction en insérant des corps d'étanchéité (60) entre leurs faces à serrer les unes contre les autres au moyen de tiges de traction ou de serrage auxquelles s'étendent parallèlement des sections de canaux prévues à l'intérieur des corps de base et se raccordant au niveau des faces avant pour former des canaux pour des fluides de commande et d'alimentation et qui peuvent être reliées aux différents porte-outils d'instruments dentaires par l'intermédiaire d'autres canaux ou d'alésages prévus à l'intérieur des corps de base, caractérisé en ce qu'au niveau des faces avant des corps de base (8), identiques à l'état initial et éventuellement retouchés lors du montage des différents blocs de soupape de commande (I à V), débouchent en plus des alésages (9) pour les tiges de serrage (35), exclusivement, les sections de canaux (10 à 15) dont les embouchures sont disposées symétriquement par rapport à une axe géométrique vertical moyen (X) des corps de base, dans des surfaces avant perpendiculaires au sens de serrage et en ce que tous les axes géométriques des canaux et des alésages (22, à 28), prévus à l'intérieur de chaque corps de base (8) et présentant une chambre transversale (18) avec un siège de soupape (19), s'étendent transversalement au sens de serrage.

2. Dispositif suivant la revendication 1, caractérisé en ce qu'en vue de former les canaux pour les fluides de commande et d'alimentation chaque corps de base (8) contient six sections de canaux (10 à 15) dont quatre (10, 11; 14, 15) sont symétriques, par paire, aussi bien par rapport à l'axe vertical (X) qu'à l'axe (Y) de la chambre transversale et dont deux (12, 13) ne sont symétriques que par rapport à l'axe vertical (X).

3. Dispositif suivant l'une des revendications 1 et 2, caractérisé en ce que les canaux ou alésages prévus à l'intérieur du corps de base comprennent des sections de canaux transversales (22, 23) alignées les unes avec les autres en s'étendant parallèlement à la chambre transversale (18) et dont les embouchures en regard se terminent à une certaine distance les unes des autres.

4. Dispositif suivant l'une des revendications 1 à 3, caractérisé en ce que les alésages pour les tiges de serrage (35) comprennent deux passages (9) dont les centes situés sur l'axe vertical (X) sont disposés de part et d'autre de l'intersection de cet axe et de l'axe (Y) de la chambre transversale (18) tout en se trouvant à distance égale de cette intersection.

5. Dispositif suivant l'une des revendications 1 à 4, caractérisé en ce que la chambre transversale (18) est suivie par une section de canal (24) s'étendant perpendiculairement à l'axe (Y) de la chambre et qui débouche, au niveau d'une surface frontale supérieure du corps de base (8), dans un siège de soupape (25).

6. Dispositif suivant l'une des revendications 1 à 5, caractérisé en ce que les corps de base (8) comportent plusieurs couvercles différents (40, 47, 50, 58) qui sont réalisés pour permettre une interaction différente entre un corps de soupape (44) coopérant avec le siège de soupape (19) de la chambre transversale (18) et/ou avec d'autres corps de soupape (49) guidés dans les couvercles eux-mêmes ou par des emplacements de raccordement (25).

7. Dispositif suivant l'une des revendications 1 à 6, caractérisé en ce que des joints d'étanchéité (60), entourant avec leur surface les embouchures prévues dans les surfaces frontales et s'engageant avec des manchons cylindriques formant des joints annulaires (63) dans les fraisages (17) prévus au niveau des embouchures des sections de canaux (10 à 15), sont disposés entre les surfaces frontales en regard des corps de base (8) montés en série (fig. 17 et 18).

8. Dispositif suivant l'une des revendications 1 à 7, caractérisé en ce que des parois de séparation (16), pouvant être supprimées facilement, sont prévues à l'intérieur des sections de canaux (10 à 15).

9. Dispositif suivant l'une des revendications 1 à 8, caractérisé en ce que certains canaux ou alésages (24, 27) ou respectivement des sections de canaux (11), à l'intérieur des différents corps de base (8) des blocs de soupape (I à IV) de l'ensemble, sont obturés par des billes (29) enfoncées à force.

FIG.1

FIG. 2

FIG.5

FIG.3

FIG.4

FIG.6

FIG.7

FIG.10

FIG.9

FIG.8

4

I

FIG.11

FIG.12

FIG.13

IV

59  14  19

FIG.14

V

FIG.15

FIG. 16

FIG. 18

FIG. 17